# DEMANDE DE BREVET EUROPEEN

(11) **EP 2 012 210 A1**
(43) Date de publication de la demande: **07.01.2009**
(21) Numéro de dépôt: 08159543.1
(22) Date de dépôt: 02.07.2008
(51) Int. Cl.: G05B 23/02

(54) **Procédé d'amelioration de l'integrité et de la securité d'un système avionique**

(30) Priorité: 06.07.2007 FR 0704903
(71) Demandeur: THALES, 92200 Neuilly sur Seine (FR)
(72) Inventeur: Depraz, David, 26000 VALENCE (FR); Coatantiec, Jacques, 26120 FAUCONNIERES (FR); Renard, Alain, 26120 CHABEUIL (FR)
(74) Mandataire: Chaverneff, Vladimir

(57) **Abrégé**

La présente invention est relative à un procédé d'amélioration de l'intégrité et de la sécurité d'un système, ce procédé permettant, d'une part, de détecter et de localiser une anomalie d'un système, et d'autre part d'estimer l'impact d'une telle anomalie sur la dégradation des performances, en vue d'atteindre le niveau de sécurité requis et de sécuriser les données fournies par ce système, et ce procédé est caractérise en ce qu'il consiste, dans un système comportant des sous-ensembles, à surveiller le bon fonctionnement de sous-ensembles en contrôlant leurs fonctions de transfert respectives en mode opérationnel à l'aide de stimuli envoyés à ces sous-ensembles.

## Description

La présente invention se rapporte à un procédé d'amélioration de l'intégrité et de la sécurité d'un système, et en particulier d'un système avionique.

Actuellement, le problème de la sécurisation des mesures de radionavigation représente un point critique pour les applications dites GNSS, et souvent empêche son utilisation en tant que moyen unique de radionavigation des aéronefs.

Dans le domaine aéronautique, l'obtention d'un certificat de navigabilité d'un équipement est l'un des aspects les plus coûteux et les plus difficiles de la conception de n'importe quel aéronef, et en particulier de son système électronique de vol (également appelé système avionique).

Cette difficulté est liée à la dépendance croissante de l'aéronef et de son équipage aux systèmes avioniques. Cette dépendance a entraîné un lourd devoir de responsabilité sur la robustesse de ces systèmes. Une exigence clef dans la conception des systèmes avioniques est qu'ils ne doivent jamais entraîner de situation catastrophique, ou, en pratique que la probabilité d'occurrence d'une situation catastrophique soit négligeable.

Toutes les parties d'un aéronef sont soumises à des analyses de sécurité. Pour ce qui est des systèmes avioniques, ces méthodes d'analyse sont dictées par des autorités institutionnelles, comme par exemple la FAA ou l'EASA pour l'aviation civile. Dans le monde militaire, les règles de sécurité sont en général moins contraignantes.

Les méthodologies de sécurité ont un impact significatif sur l'architecture du système et sur ses composants. De façon résumée, on peut considérer que les exigences de sécurité entraînent deux types de contraintes sur les équipements avioniques :
- des contraintes quantitatives de fiabilité des équipements (taux de pannes par heure), d'intégrité (probabilité pour un équipement de délivrer une information erronée sans détection d'erreur), etc.
- des contraintes qualitatives portant sur le processus de développement, formalisées dans des normes (par exemple RTCA-DO254 et RTCA-DO178 pour les développements matériels et logiciels). Ces normes imposent des contraintes sur la méthodologie de développement, les tests, les vérifications, etc, dont le respect est réputé aboutir à des conceptions d'équipements sûrs. En général, ces normes ont plusieurs niveaux d'exigence (par exemple : A, B, C,..) selon le niveau de « criticité » (niveau de développement).

Le respect de ces contraintes, notamment des contraintes qualitatives, peut poser des problèmes, en particulier dans les cas où des contraintes techniques, budgétaires ou légales imposent l'utilisation d'un composant ou d'un sous-ensemble qui n'a pas été développé avec le niveau qualitatif requis pour son application dans l'aéronautique, comme c'est par exemple le cas des microprocesseurs.

Les règles de certification prévoient déjà des cas d'utilisation de composants ou de sous-systèmes non développés au niveau requis à l'intérieur d'un système qui, lui, est développé au niveau requis. Ces « exceptions » tolérées sont courantes pour les composants électroniques (microprocesseurs, mémoires,...). Dans ces cas, la non-conformité qualitative sur le développement est actuellement résolue par les méthodes suivantes :
- test exhaustif du composant. Cette méthode consiste à tester le composant dans toutes les configurations possibles, mais elle est en pratique difficile à mettre en oeuvre pour des systèmes complexes, à mémoire ou contenant du logiciel.
- test par l'usage. Cette méthode est la plus simple pour tous les composants d'utilisation courante. L'utilisation intensive des composants, même dans des domaines extérieurs à l'aéronautique, est considérée comme une garantie suffisante de leur sécurité. Cette méthode est souvent utilisée pour des microprocesseurs, mais elle est sans fondement pour les composants peu répandus ou peu utilisés.

D'autre part, il existe des méthodes de sécurisation classiquement basées sur une méthodologie de développement associée à une analyse de l'occurrence des défaillances matérielles et de leurs impacts possibles sur les performances des systèmes les mettant en oeuvre.

Ces méthodes connues ne peuvent donc être appliquées à des systèmes intégrant des éléments non développés selon le niveau de méthodologie adéquat.

La présente invention a pour objet un procédé d'amélioration de l'intégrité et de la sécurité d'un système, ce procédé permettant, d'une part, de détecter et de localiser une anomalie d'un système, et d'autre part d'estimer l'impact d'une telle anomalie sur la dégradation des performances, en vue d'atteindre le niveau de sécurité requis et de sécuriser les données fournies par ce système. Ce procédé doit également permettre d'alléger les contraintes qualitatives sur le processus de développement d'un équipement ou d'un sous-ensemble de cet équipement en permettant l'emploi de composants d'un niveau de développement *a priori* non conforme à leur usage dans un système avionique.

Le procédé conforme à l'invention est caractérisé en ce qu'il consiste, dans un système comportant des sous-ensembles, à surveiller le bon fonctionnement de sous-ensembles ou de leurs composants en contrôlant leurs fonctions de transfert respectives en mode opérationnel à l'aide de stimuli envoyés à ces sous-ensembles. Par la suite, l'objet de la surveillance sera indifféremment désigné par système, sous-ensemble ou par composant.

Le dispositif de mise en oeuvre du procédé de l'invention, pour la surveillance d'un système est caractérisé en ce qu'il comporte un générateur de stimuli, un dispositif de gestion du générateur de stimuli, et un dispositif d'analyse des signaux de sortie du système à sécuriser. De façon avantageuse, il comporte également un dispositif d'observation et de contrôle des réponses et d'estimation de la sécurité obtenue.

La présente invention sera mieux comprise à la lecture de la description détaillée d'un mode de réalisation, pris à titre d'exemple non limitatif et illustré par le dessin annexé, sur lequel :
- la figure 1 est un bloc-diagramme simplifié d'un dispositif de mise en oeuvre du procédé de l'invention,
- la figure 2 est un bloc-diagramme d'un récepteur GNSS de mise en oeuvre du procédé de l'invention

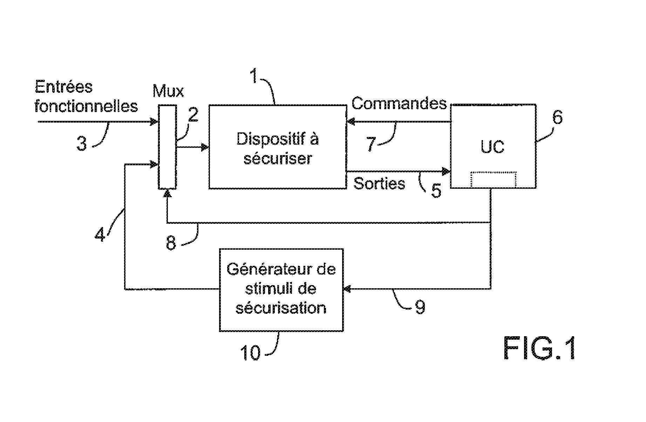

L'invention est décrite en détail ci-dessous en référence à son application à un récepteur GNSS, mais il est bien entendu qu'elle n'est pas limitée à cette seule application, et qu'elle peut être mise en oeuvre dans tout système (tel que celui schématisé en figure 1 et brièvement décrit ci-dessous) dans lequel un niveau élevé d'intégrité est requis et/ou dans lequel l'utilisation de sous-ensembles standard ne possédant pas le niveau de sécurité nécessaire n'est pas envisageable en l'état actuel de l'art antérieur.

Le procédé de l'invention permet de détecter dans un récepteur de radionavigation de type GNSS toute anomalie de sa fonction de transfert et de la localiser, ainsi que d'estimer son impact sur les performances de ce récepteur. Les anomalies en question sont, en particulier, des pannes matérielles, des dérives matérielles (vieillissement et/ou effet de la température), des erreurs de conception matérielles et logicielles. Ce procédé fait appel à un dispositif de surveillance de composants non conformes d'un système, cette surveillance permettant de contrôler l'intégrité du système, Ce dispositif de surveillance est intégré au système et développé à un niveau de développement conforme à celui du système. L'intégrité du composant est alors garantie par l'intégrité et par la disponibilité de son système de surveillance. L'invention est particulièrement, mais non pas de façon exclusive, appropriée aux systèmes dans lesquels un composant (ou plusieurs) non conforme réalise une mesure d'une grandeur physique ou électrique. En cas de défaut d'intégrité d'un composant détecté par le système de surveillance, le reste du système peut être alerté, ce qui permet d'assurer la sécurité globale du système. Un autre avantage de ce dispositif de surveillance est de détecter d'éventuelles pannes matérielles d'un composant non conforme.

Le contrôle de la fonction de transfert complète d'un système complexe étant trop difficile à mettre en oeuvre, l'invention propose de surveiller cette fonction de transfert pour la configuration de ce système utilisée en mode opérationnel.

Par rapport aux procédés classiques connus, le procédé de l'invention ne nécessite pas d'analyse profonde des éléments contenus dans la fonction contrôlée. Il est donc applicable, par exemple, à des systèmes comportant des modules développés pour des applications ne nécessitant qu'un niveau de sécurité moindre, mais permet néanmoins d'atteindre le niveau de sécurité requis. D'autre part, il permet de réaliser l'analyse du système contrôlé au point de fonctionnement nominal, et optionnellement autour de ce point. Ce procédé doit donc être mis en oeuvre en phase opérationnelle des systèmes contrôlés, car les valeurs des stimuli sont dépendantes de la configuration utilisée des systèmes.

Il faut toutefois noter que le procédé de l'invention ne fournit pas de garantie supplémentaire au sujet de la disponibilité d'un composant non conforme. Il n'est donc mis en oeuvre que lorsqu'une contrainte d'intégrité justifie le niveau de développement du système, comme c'est, par exemple, le cas des sous-systèmes avioniques, et notamment le cas des systèmes de radionavigation par satellites, qui ne sont pas un moyen primaire de navigation, et dont l'indisponibilité n'entraîne donc pas de situation « catastrophique ».

Le procédé de l'invention consiste en particulier à vérifier que des réponses d'un composant sous surveillance faisant partie d'un système à des stimuli de surveillance sont conformes à sa spécification. Ces stimuli de surveillance utilisent les signaux d'entrée et de sortie opérationnels de ce composant. Les stimuli peuvent soit se superposer à ces signaux opérationnels, soit leur être substitués de façon momentanée. En cas de détection d'une non-intégrité, celle-ci est signalée au système. La surveillance peut être soit continue, soit être cyclique avec une fréquence de récurrence au minimum compatible avec les exigences de sécurité du système, c'est-à-dire que le laps de temps entre deux tests de surveillance consécutifs doit être inférieur à la durée au-delà de laquelle une donnée erronée produite par ce composant peut entraîner une situation catastrophique.

Selon une variante du procédé de l'invention, les stimuli de test sont calculés et appliqués au composant à surveiller de façon que la réponse théorique du composant soit identique à sa dernière réponse opérationnelle. On peut ainsi ajuster en permanence le test du composant à sa zone de fonctionnement opérationnel.

On a représenté en figure 1 un dispositif 1 à sécuriser à l'entrée duquel est branché un multiplexeur ou dispositif similaire 2 recevant des signaux d'entrée fonctionnels 3, et des stimuli 4, décrits ci-dessous. Le dispositif 1 peut comporter un nombre quelconque de sous-ensembles. Les sorties 5 du dispositif 1 sont reliées de façon appropriée à un processeur 6, qui lui envoie des signaux de commande 7. En outre, le processeur 6 envoie des signaux de commande 8 au multiplexeur 2 et des signaux de commande 9 à un générateur de stimuli 10. Ainsi, le processeur 6 force le multiplexeur à transmettre au dispositif 1 soit les signaux d'entrée fonctionnels 3, soit les stimuli 4, selon que le dispositif 1 est en fonctionnement classique ou doit recevoir les stimuli. Le processeur 6 est commandé par un programme spécifique permettant de générer les stimuli nécessaires pour assurer la sécurisation optimale du dispositif 1, de contrôler l'envoi de ces stimuli (4) et pour analyser les signaux de sortie 5. Cette vérification se fait soit par test du dispositif 1 pour son point de fonctionnement utilisé par sa fonction opérationnelle, soit par analyse autour de ce point.

De façon avantageuse, la mise en oeuvre du procédé de l'invention est rendue non perturbante si l'on dispose d'une redondance matérielle permettant de réaliser séquentiellement la sécurisation du dispositif 1 par blocs de sous-ensembles de la fonction globale du dispositif 1. Par exemple, dans le cas d'un dispositif de traitement des signaux de radionavigation reçus de satellites, ce dispositif se composant de plusieurs voies de traitement en parallèle affectées chacune à l'un des satellites d'une constellation de satellites reçue, il est possible d'adjoindre un canal excédentaire, identique aux autres canaux, afin de libérer à chaque fois, par réaffectation dynamique des voies, une de ces voies et la tester sans perturber la réception et le traitement des signaux reçus des différents satellites.

Le choix des stimuli est une caractéristique importante de l'invention. Il est déterminé par l'analyse de la fonction mise en oeuvre par le dispositif à tester recevant ces stimuli, par la connaissance, même partielle, de l'architecture de ce dispositif, du niveau exigé de performances et de l'impact des performances de ce dispositif sur la qualité du système incorporant ce dispositif. Des méthodes complémentaires sont mises en oeuvre pour permettre de déterminer les caractéristiques de ces stimuli (analyse logique, analyse de chemin, statistiques,...). Une condition essentielle est de choisir ces stimuli pour qu'ils soient représentatifs du point de fonctionnement courant du dispositif testé (même configuration d'échange ou équivalence), afin de contrôler le dispositif à son point d'utilisation ou autour de ce point.

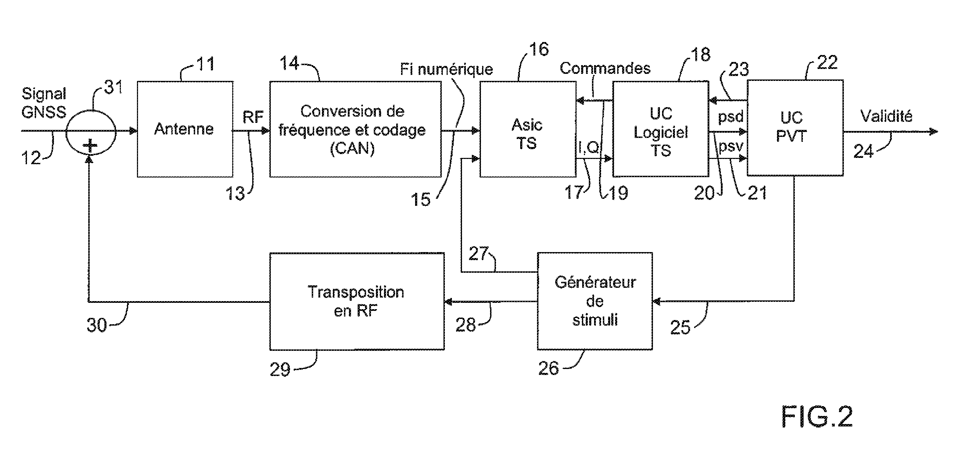

On a schématisé en figure 2 un récepteur de radionavigation GNSS auquel on a adjoint le dispositif de sécurisation selon l'invention. Cet ensemble comporte une antenne de réception 11 pour recevoir des signaux 12 de radionavigation émis par des satellites. Les signaux RF 13 produits par l'antenne 11 sont envoyés à un convertisseur analogique/numérique 14 de conversion de fréquence et de codage. Les signaux numériques de sortie 15 à fréquence intermédiaire sont envoyés à un circuit dédié 16 de traitement de signal, réalisé par exemple sous forme d'un ASIC. Le circuit 16 envoie des signaux 17 connus sous la dénomination classique 1 et Q à un processeur 18 de gestion de traitement de signal dont il reçoit des signaux de commande 19. Le processeur 18 envoie des signaux 20 («psd» pour pseudo-distance) et 21 (« psv» pour pseudo-vitesse) à un processeur 22 qui lui envoie des signaux de commande 23 et qui émet des signaux 24 de validité/ non validité des signaux de radionavigation reçus par l'antenne 11. Le processeur 22 est le processeur de localisation équipant habituellement le récepteur. En outre, le processeur 22 comporte une fonction de surveillance qui émet un signal (25) pour commander un générateur de stimuli 26. Le générateur 26 envoie ses stimuli au circuit 16 par la liaison 27. En variante, le générateur 26 envoie ses stimuli à un circuit 28 de transposition en fréquence (transposition vers la même fréquence RF que celle des signaux de satellites 12) dont les signaux de sortie sont envoyés (30) à un coupleur 31 branché à l'entrée de l'antenne 11 et recevant d'autre part les signaux 12.

Le dispositif de sécurisation combiné avec le récepteur de radionavigation de la figure 2 permet de sécuriser deux fonctions importantes de ce récepteur, à savoir:
- le circuit de traitement de signal générant les pseudo-mesures 1 et Q,
- le circuit 14 convertisseur de fréquence et convertisseur analogique/numérique de la chaîne de réception.

La gestion des stimuli est contrôlée selon deux niveaux de contrôle :
- contrôle du circuit 16 en utilisant ses signaux de sortie naturels après leur traitement par les processeurs 18 et 22,
- contrôle de la chaîne de réception en utilisant ses signaux de sortie naturels traités par le circuit 16 (déjà sécurisé par le contrôle précédent).

Le logiciel de sécurisation est implanté dans le processeur 22 avec une ségrégation et un niveau de développement adéquats. On notera que le test global du récepteur de radionavigation à l'aide de stimuli permet également de sécuriser des fonctions logicielles implantées dans le processeur 18, et en particulier des fonctions de traitement de signal.

Dans l'application, décrite ci-dessus, à un récepteur de radionavigation GNSS, la fonction de corrélation implantée dans le circuit 16 doit réaliser la corrélation du signal d'entrée 12 avec une réplique locale des signaux GNSS reçus asservie sur ces signaux, afin de calculer localement la fonction de corrélation, par exemple sur 32 délais adjacents, au pas d'un demi-chip, et ce, pour tous les satellites à poursuivre. Cette fonction de corrélation peut être subdivisée en quatre sous-ensembles :
- entrée des échantillons (15),
- génération de la réplique locale des signaux GNSS, avec contrôle en lecture des signaux GNSS et en écriture de leur réplique,
- corrélation (produit complexe) :cette corrélation se fait de façon habituelle, puisque, par hypothèse, les stimuli sont la réplique la plus exacte possible des signaux réels GNSS,
- filtrage du produit de corrélation, également effectué de façon habituelle.

Une analyse de criticité montre qu'une caractéristique importante de l'invention est la génération et le contrôle de la réplique des signaux GNSS, les autres éléments (filtrage par corrélation, cryptage éventuel,..) ayant des effets décelables en fonctionnement nominal du récepteur. Afin contrôler cet ensemble au point de fonctionnement courant du récepteur, il est possible de générer un signal « like » (réplique, cryptée ou non, du signal GNSS pour ce point de fonctionnement courant) envoyé au coupleur 31 et de contrôler l'ensemble des signaux de sortie filtrés du circuit 16, représentant la fonction de corrélation, à savoir une corrélation effectuée pour le signal maximal sur la voie « ponctuelle », pour le signal d'amplitude réduite sur les voies adjacentes à cette voie ponctuelle et pour le signal pratiquement nul pour les autres voies.. Ceci permet de valider le contrôle de la réplique locale du signal GNSS et du calcul de la fonction de corrélation.

En conclusion, l'invention permet de détecter et de quantifier les effets d'un dysfonctionnement d'un système tel qu'un récepteur de radionavigation. Il est ainsi possible de renforcer les capacités de ce dernier en matière de sécurité, en particulier lorsqu'il s'agit d'applications stratégiques. De façon générale, l'invention permet de garantir l'intégrité d'un composant et/ou d'un système par contrôle de son bon fonctionnement à l'instant considéré et dans le domaine de fonctionnement considéré.

La relative simplicité des moyens nécessaires pour mettre en oeuvre le procédé de l'invention , à savoir l'algorithme de traitement qui est implantable dans un calculateur existant (avec ségrégation entre cet algorithme et les autres fonctions du calculateur) ou bien implanté dans un petit calculateur dédié associé à un petit circuit ASIC (ou FPGA), avec le niveau de développement adapté aux exigences d'intégrité à respecter, rend possible son intégration à faible coût dans la majorité des récepteurs de signal GNSS militaires ou civils.

## Revendications

1. Procédé d'amélioration de l'intégrité et de la sécurité d'un système, **caractérisé en ce qu'**il consiste, dans un système comportant des sous-ensembles, à surveiller le bon fonctionnement de sous-ensembles ou de leurs composants en contrôlant leurs fonctions de transfert respectives en mode opérationnel à l'aide de stimuli envoyés à ces sous-ensembles.

2. Procédé selon la revendication 1, **caractérisé en ce que** les stimuli sont superposés aux signaux d'entrée opérationnels des sous-ensembles.

3. Procédé selon la revendication 1, **caractérisé en ce que** les stimuli sont substitués de façon momentanée aux signaux d'entrée opérationnels des sous-ensembles.

4. Procédé selon l'une des revendications précédentes, **caractérisé en ce que** la surveillance est effectuée de façon continue.

5. Procédé selon l'une des revendications 1 à 3, **caractérisé en ce que** la surveillance est effectuée de façon cyclique avec une fréquence de récurrence au minimum compatible avec les exigences de sécurité du système.

6. Procédé selon l'une des revendications précédentes, **caractérisé en ce que** les stimuli de test sont calculés et appliqués au composant ou sous-ensemble à surveiller de façon que sa réponse théorique soit identique à sa dernière réponse opérationnelle.

7. Procédé selon l'une des revendications précédentes, **caractérisé en ce qu'**il est mis en oeuvre pour un récepteur de radionavigation GNSS et que les stimuli sont une réplique locale des signaux GNSS reçus, cette réplique étant asservie sur ces signaux.

8. Procédé selon la revendication 7, **caractérisé en ce que** la réplique est une réplique cryptée du signal GNSS.

9. Dispositif de mise en oeuvre du procédé selon l'une des revendications précédentes, pour la surveillance d'un système (1 - 11, 14, 16), **caractérisé en ce qu'**il comporte un générateur de stimuli (10, 26), un dispositif de gestion (6, 22) du générateur de stimuli, et un dispositif d'analyse des signaux de sortie du système à sécuriser (6-18).

10. Dispositif selon la revendication 9, **caractérisé en ce qu'**il comporte également un dispositif d'observation et de contrôle des réponses et d'estimation de la sécurité obtenue.

11. Dispositif selon la revendication 9 ou 10, **caractérisé en ce qu'**il fait partie d'un récepteur de radionavigation GNSS.

12. Procédé selon la revendication 11, **caractérisé en ce que** le générateur de stimuli (26) est directement relié à une entrée du circuit (16) d'élaboration des signaux de pseudo-vitesse et de pseudo-distance du récepteur GNSS.

13. Procédé selon la revendication 11, **caractérisé en ce que** le générateur de stimuli (26) est relié par l'intermédiaire d'un circuit de transposition RF (29) et d'un coupleur (31) à l'antenne (11) du récepteur GNSS.
